# EUROPEAN PATENT APPLICATION

(11) **EP 4 382 795 A1**
(43) Date of publication of application: **12.06.2024**
(21) Application number: 22851615.9
(22) Date of filing: 20.04.2022
(51) Int. Cl.: F16M 11/04, H04M 1/04

(54) **OBJECT FIXING STRUCTURE**

(30) Priority: 03.08.2021 CN 202121788451 U
(71) Applicant: Shenzhen Moft Technology Co., Ltd, Shenzhe, Guangdong 518000 (CN); Lin, Ben-tien, New Taipei City 220 (TW)
(72) Inventor: LIN, Ben-tien, Taipei City 220, Taiwan (TW)
(74) Representative: Michalski Hüttermann & Partner Patentanwälte mbB
(86) International application number: PCT/CN2022/087964
(87) International publication number: WO 2023/010892

(57) **Abstract**

An object fixing structure includes a first plate-shaped fixing part with a side connected to an object, a second plate-shaped fixing part having a first side and a second side, and a first curved part disposed between the first plate-shaped fixing part and the second plate-shaped fixing part. The first plate-shaped fixing part and the second plate-shaped fixing part can be folded relative to each other, and the first side is substantially in contact with the object and the second side is substantially parallel to the surface of the object during a storage state; and the second side is attached and fixed to the first plate-shaped fixing part in a non-permanent fixation manner and the second side is substantially parallel to the surface of the object during a folded state.

## Description

### BACKGROUND

### Technical Field

The present disclosure relates to the field of an object fixing structure, and more particularly to the object fixing structure capable of fixing an object (such as a mobile device) to the fixing structure by magnetism to facilitate users to browse the object.

### Description of Related Art

In recent years, the mobile communication technology advances rapidly, and various mobile devices such as mobile phones, Tablet PCs, etc. have become indispensable common items in daily life. However, these mobile devices are often used for watching videos, inquiring about information, or operating social networking sites, etc. Most of these mobile devices need to be viewed or manipulated in a handheld manner, which leads to tremendous inconveniences.

In addition, when a user is working, the mobile device is often placed flatly on the desktop, and thus making it difficult for the user to browse the screen content or operate and control the screen from a convenient angle. Users are also often unable to pay attention to whether there is new information on the mobile device at any time, thereby resulting in delay and inconvenience in communications.

### SUMMARY

In view of the aforementioned drawbacks of the related art, the present discloser based on years of experience in the related industry to conceive and propose an object fixing structure with the functions of fixing and supporting a mobile device to greatly improve the convenience of browsing the mobile device. In addition, the object fixing structure of this disclosure can also be used to fix other objects in order to facilitate users to browse the objects.

It is a primary objective of the present disclosure to provide an object fixing structure, which can be attached to an object such as a computer screen surface. After unfolding the object fixing structure, it can be used as a stand for fixing the object to facilitate users to place the object or browse the object.

To achieve the aforementioned objective, this disclosure discloses an object fixing structure, including: a first plate-shaped fixing part, with a side coupled to an object; a second plate-shaped fixing part, and having a first side, a second side, and a first curved part disposed between the first plate-shaped fixing part and the second plate-shaped fixing part, so that the first plate-shaped fixing part and the second plate-shaped fixing part can be folded relative to each other; characterized in that the first side is substantially in contact with the surface of an object and the second side is substantially parallel to the surface of the object during a storage state, and the second side and the first plate-shaped fixing part are attached and fixed with each other in a non-permanent fixation manner and the second side is substantially parallel to the surface of the object during a folded state. During the folded state, the first side and the second side the first side and the second side are partially protruded from an edge of the object.

In some embodiments, the object fixing structure includes a first plate-shaped fixing part substructure, and a part of the first plate-shaped fixing part substructure is connected to the first plate-shaped fixing part. During the storage state, the first side and the first plate-shaped fixing part substructure are connected to each other.

In some embodiments, object fixing structure further includes a second plate-shaped fixing part substructure, and a second curved part is disposed between the second plate-shaped fixing part substructure and the second plate-shaped fixing part, and the second plate-shaped fixing part substructure and the second plate-shaped fixing part are bent by the second curved part.

In some embodiments, the object fixing structure further includes a second plate-shaped fixing part substructure, and the second plate-shaped fixing part substructure and the second plate-shaped fixing part are connected to each other in a non-permanent fixation manner. The first plate-shaped fixing part and the second plate-shaped fixing part have a magnetic part; the first plate-shaped fixing part substructure has a magnetic part; and the second plate-shaped fixing part substructure has a magnetic part.

The object fixing structure with an object support function as described in claim 1 is characterized in that the object is a screen, and the first side is attached to a non-display surface of the screen during the storage state, and the second side and a display surface of the screen are facing the same direction during the folded state.

In summation of the description above, the object fixing structure with an object support function in accordance with this disclosure is a support stand structure provided for users to fold, unfold, and erect a support stand quickly after the positioning and fixing steps. During storage, the second fixing part is folded towards the first fixing art to form a multi-layered plate structure after the positioning and fixing steps, so as to improve the convenience of use and practicality.

### BRIEF DESCRIPTION OF THE DRAWINGS

FIG. 1 is a front view of an object fixing structure in a storage state in accordance with a first preferred embodiment of this disclosure;
FIG. 2 is a rear view of the object fixing structure in a storage state in accordance with the first preferred embodiment of this disclosure;
FIG. 3 is a schematic view of the object fixing structure attached to the backside of an object in accordance with this disclosure;
FIG. 4 is a schematic view of the object fixing structure starting to be folded in accordance with this disclosure;
FIG. 5 is another schematic view of the object fixing structure starting to be folded in accordance with this disclosure;
FIG. 6 is a schematic view of the object fixing structure in a folded state in accordance with the first preferred embodiment of this disclosure;
FIG. 7 is a schematic view of the object fixing structure in a folded state and attached onto the backside of an object in accordance with the first preferred embodiment of this disclosure;
FIG. 8 is a front view of the object fixing structure in a storage state in accordance with a second preferred embodiment of this disclosure;
FIG. 9 is a front view of the object fixing structure in a storage state in accordance with a third preferred embodiment of this disclosure;
FIG. 10 is a schematic view of an application of this disclosure; and
FIG. 11 is another schematic view of an application of this disclosure.

### DESCRIPTION OF THE EMBODIMENTS

This disclosure will now be described in more detail with reference to the accompanying drawings that show various embodiments of this disclosure.

In this disclosure, the term "non-permanent fixation manner" refers to fixing, connecting, coupling or linking two objects by magnetism, Velcro tape, detachable snap mechanism, restickable glue, or any other equivalent methods, and the two fixed, connected, coupled, or linked objects can be released anytime; and the term "permanent fixation manner" refers to fixing, connecting, coupling or linking two objects by non-restickable glue, sewing, nail or any other equivalent methods.

In this disclosure, the term "plate-shaped: refers to the shape of an object with a length and a width much greater than its thickness, so that the object is in a two-dimensional flat form. However, the object still has a certain thickness.

In this disclosure, the term "magnetic part" refers to any magnet or metal that can attract ferrite magnets, alnico magnets, rare earth magnets, .etc.

In this disclosure, the term "substantially parallel to" or "substantially parallel" refers to the parallelism with an allowable error of 5 degrees from the actual parallelism. In this disclosure, the term "substantially in contact: refers to the contact of some parts of the surfaces of two objects.

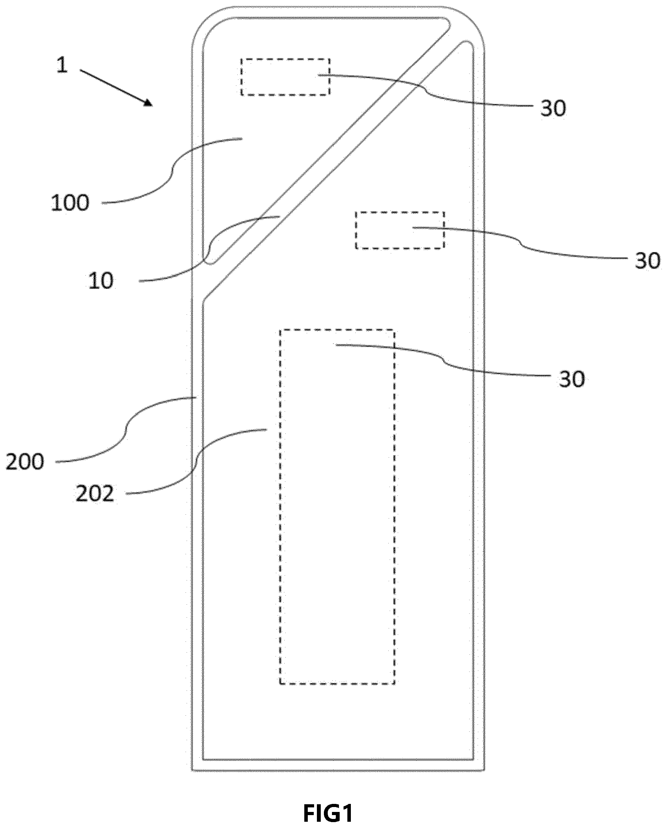

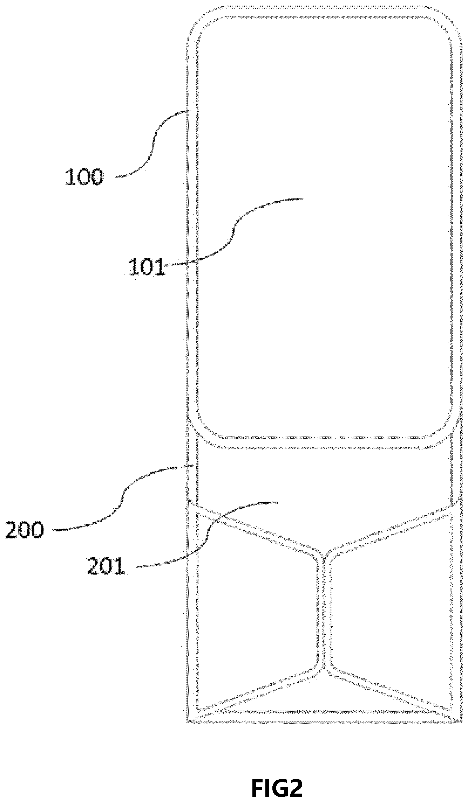

With reference to FIGS. 1 and 2 for the schematic front and rears of the object fixing structure of this disclosure respectively, this disclosure has disclosed an embodiment of an object fixing structure 1, which includes a first plate-shaped fixing part 100 and a second plate-shaped fixing part 200. A side of the first plate-shaped fixing part 100 is provided for connecting a surface of an object. In some embodiments, the first plate-shaped fixing part 100 can be connected to the surface of the object 2 in a non-permanent fixation manner or a permanent fixation manner. The users can attach the object fixing structure to an appropriate surface of an object according to their preferences. For example, the object can be the screen of a desktop computer, the screen of a notebook computer, a partition between seats in an office, or a wall, etc.

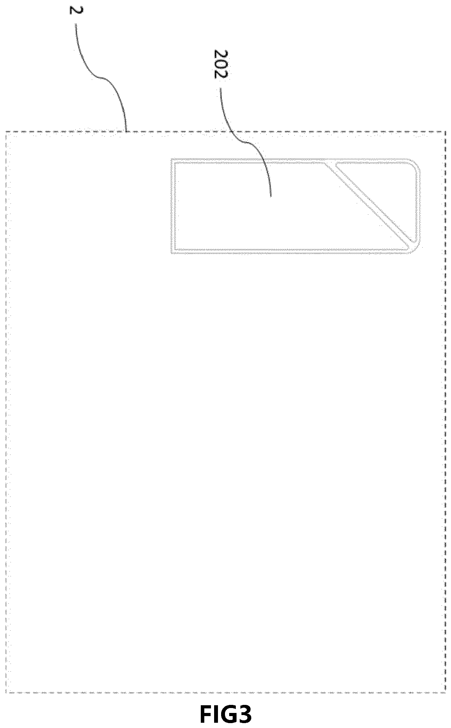

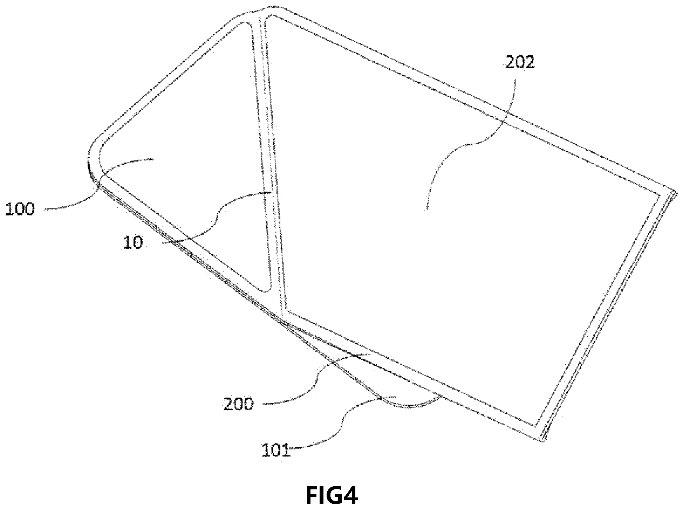

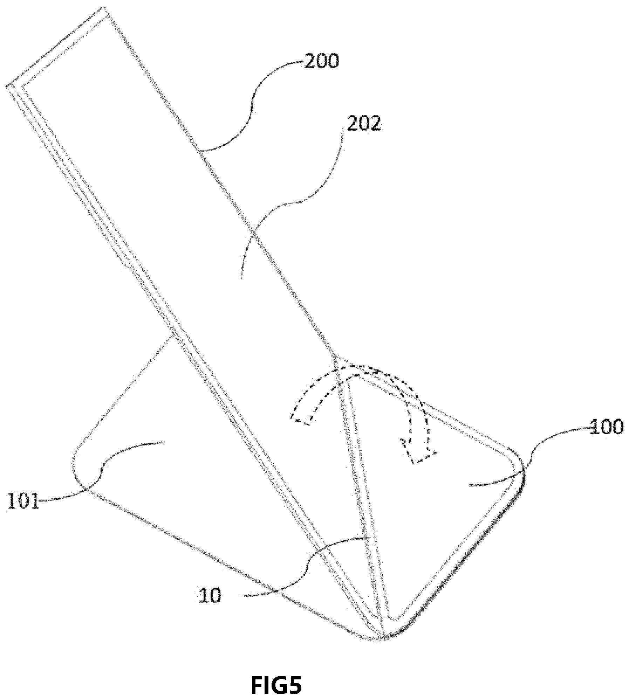

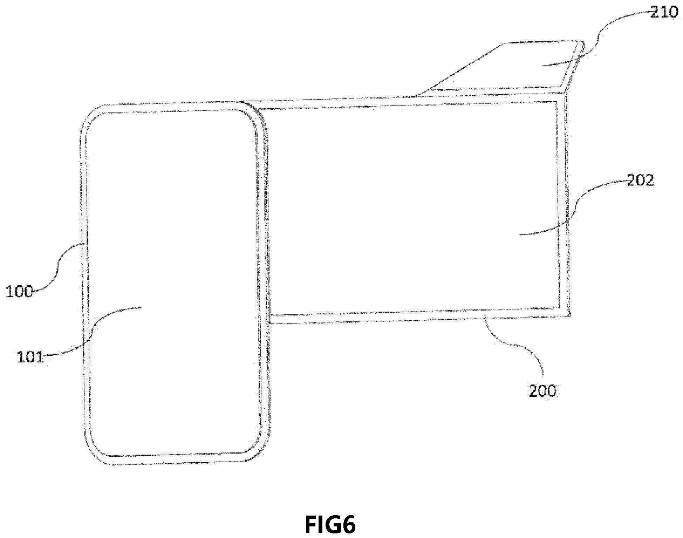

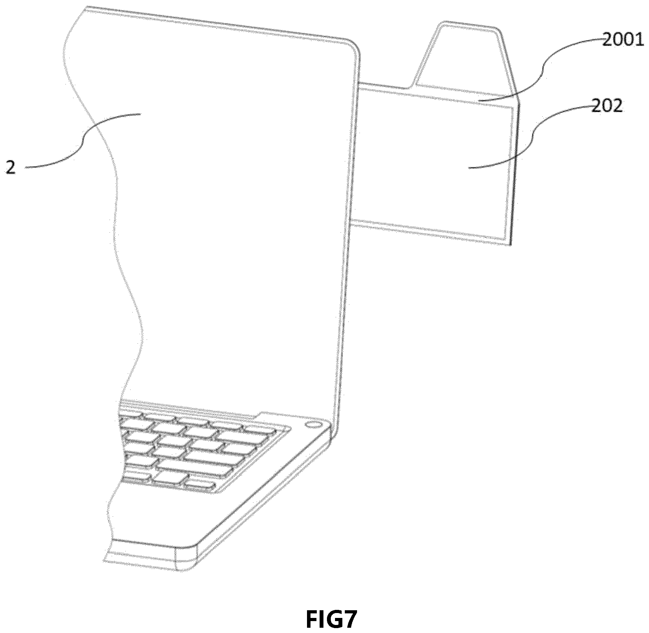

The second plate-shaped fixing part 200 has a first side 201 and a second side 202, and a first curved part 10 is disposed between the first plate-shaped fixing part 100 and the second plate-shaped fixing part 200, so that the first plate-shaped fixing part 100 and the second plate-shaped fixing part 200 can be folded relative to each other as shown in FIG. 4. In this disclosure, the first plate-shaped fixing part 100 and the second plate-shaped fixing part 200 can be bent and folded into a storage state (as shown in FIGS. 1-2), or a folded state (as shown in FIG. 6). During the storage state, the first side 201 is substantially in contact with the object 2, and the second side 202 and the surface of the object 2 are substantially parallel to each other (as shown in FIG. 3). In FIGS. 5∼6, during the folded state, the second side 202 and the first plate-shaped fixing part 100 are attached to each other in a non-permanent fixation manner and the second side 202 is substantially parallel to the surface of the object 2 (as shown in FIG. 7). For example, when the object 2 is a screen, during the storage state, the first side 201 is attached to the backside (which is a non-display surface) of the screen, the first side 201 is substantially in contact with the backside of the screen and the first side 201 and the second side 202 are substantially parallel to the backside of the screen. During the folded state, the second plate-shaped fixing part 200 is turned over by using the first curved part 10 as a rotating shaft, such that the second side 202 originally facing the backside of the screen changes its direction to face in the same direction with the display surface of the screen (as shown in FIG. 7). Therefore, the display surface of the screen and the second side 202 face towards the user. At this time, the second side 202 is substantially parallel to the surface of the screen.

It is noteworthy that during the storage state, the second plate-shaped fixing part 200, the first side 201 and the second side 202 are folded and stored into a side of the object 2 (as shown in FIG. 3). During the folded state, the second plate-shaped fixing part 200 is turned over by using the first curved part 10 as a rotating shaft, such that the first side 201 and the second side 202 are partially protruded from the profile of the object 2 (as shown in FIG. 7). In other words, the first side 201 and the second side 202 are partially protruded from an edge of the object 2 after folding as shown in FIG. 7. The "profile" mentioned here refers to the general term for the lines that form the periphery of the object 2. For example, a screen is generally in a square shape. The four sides of the square is the "profile". During the folded state, the first side 201 and the second side 202 partially go beyond the range of the four sides of the square and protruded from a side of the square.

With reference to FIGS. 2, and 4~6, the object fixing structure 1 of some embodiments further includes a first plate-shaped fixing part substructure 101 with a part connected to the first plate-shaped fixing part 100 in a permanent fixation manner or a non-permanent fixation manner. In this embodiment, the object fixing structure 1 and the surface of the object 2 are connected to each other in a permanent fixation manner or a non-permanent fixation manner by the first plate-shaped fixing part substructure 101. During the storage state, the first side 201 and the first plate-shaped fixing part substructure 101 are connected to each other in a non-permanent fixation manner. The first plate-shaped fixing part substructure 101 is not a necessary component. As described above, in some embodiments, the first plate-shaped fixing part substructure 101 can be omitted 43, and the first plate-shaped fixing part 100 is connected to the surface of the object 2 directly.

In FIGS. 7∼8, in some embodiments, the object fixing structure 1 further includes a second plate-shaped fixing part substructure 210, and a second curved part 2001 is disposed between the second plate-shaped fixing part substructure 210 and the second plate-shaped fixing part 200, and the second plate-shaped fixing part substructure 210 and the second plate-shaped fixing part 200 are bent relative to each other by the second curved part 2001. The second plate-shaped fixing part substructure 210 and the second plate-shaped fixing part 200 have a magnetic part 30 separately, such that the two can attract each other. The user can clamp an object such as a paper object by the mutual attraction of the second plate-shaped fixing part substructure 210 and the second plate-shaped fixing part 200.

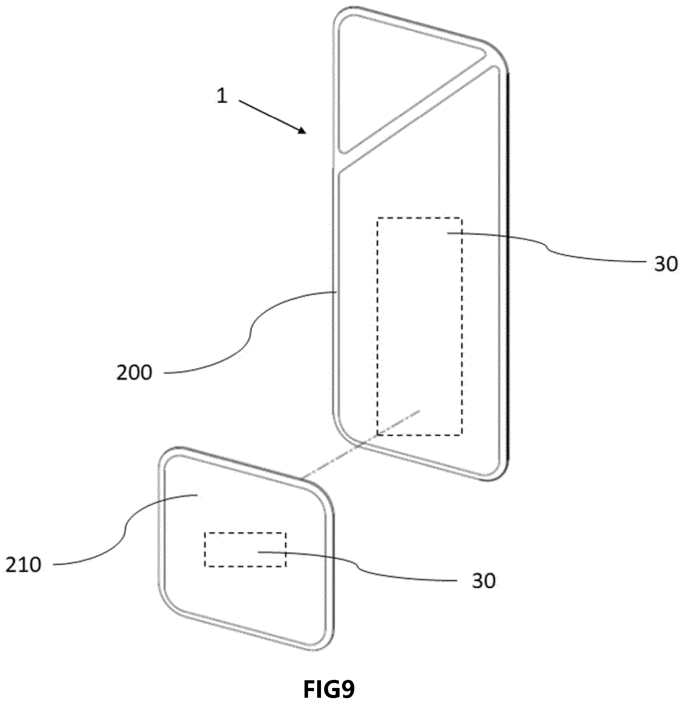

In another embodiment as shown in FIG. 9, the second plate-shaped fixing part substructure 210 is an independent component without any permanent connection with the second plate-shaped fixing part 200. The user can connect the second plate-shaped fixing part substructure 210 with the second plate-shaped fixing part 200 in a non-permanent fixation manner such as clamping the paper object, if needed.

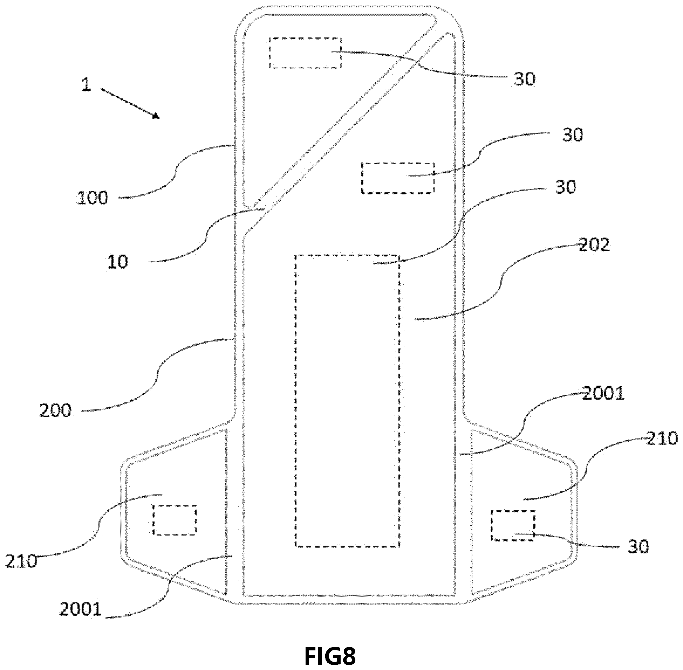

In this disclosure as shown in FIGS. 1 and 8, the first plate-shaped fixing part 100 and the second plate-shaped fixing part 200 have a magnetic part 30. Therefore, the first plate-shaped fixing part 100 and the second plate-shaped fixing part 200 can be connected and fixed to each other. As shown in FIGS. 8∼9, the first plate-shaped fixing part substructure 101 and the two plate-shaped fixing part substructures 210 also have a magnetic part 30.

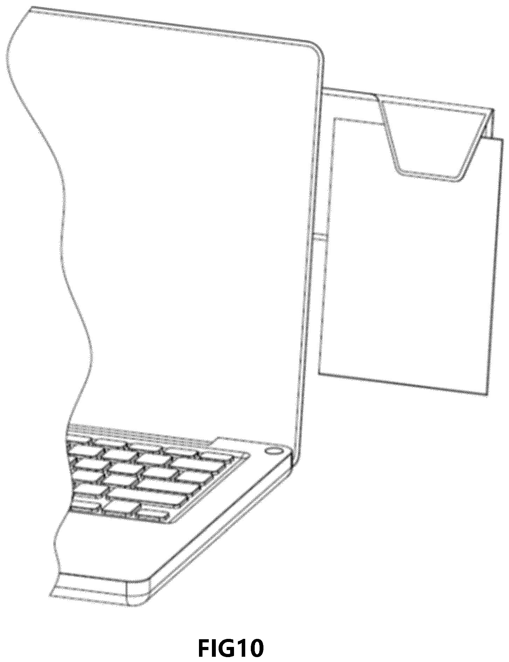

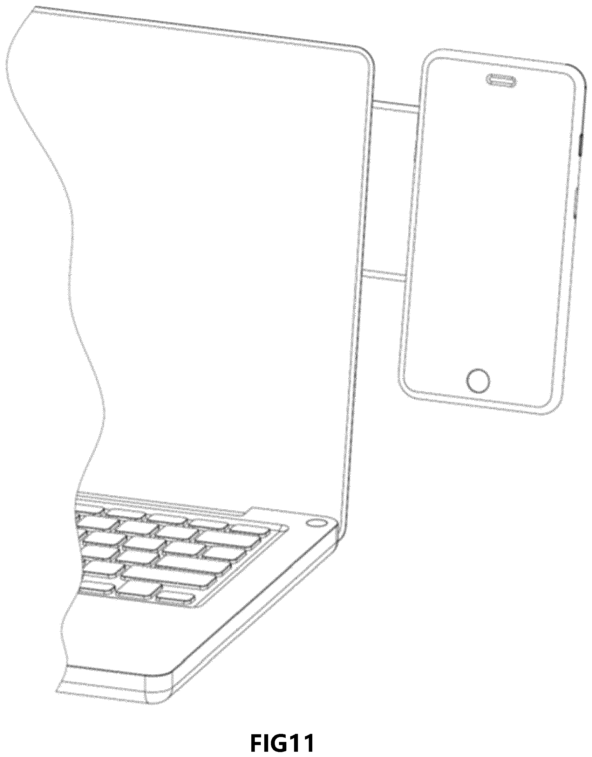

In summation of the description above, the object fixing structure 1 of this disclosure with the aforementioned structure features can be stored or folded and unfolded according to the needs of the users. After folding as shown in FIGS. 10 and 11, users connect and fix the object to the second side 202 of the second plate-shaped fixing part 200 by the magnetic force to facilitate the users to browse the object. For example, the object can be a mobile phone, a notepad, etc. When the object fixing structure of this disclosure is not in use, the user can also fold and store the object fixing structure 1 and attach it to a side of the object. In an embodiment, the second plate-shaped fixing part substructure 210 and the second plate-shaped fixing part 200 are connected to each other by the magnetic part 30 to define a stacked state, and during the stacked state, the total magnetic force of the second plate-shaped fixing part substructure 210 and the second plate-shaped fixing part 200 is greater than the individual magnetic forces of the second plate-shaped fixing part substructure 210 and the second plate-shaped fixing part 200, so that this disclosure can attract a heavier object without dropping it. Further, the present disclosure is in the shape of a plate, which greatly reduces the thickness after storage. Due to the magnetic attraction piece, the present invention is not easy to be unfolded by accidental touch, so it is quite convenient to use and store and carry, which increases the convenience and practicability during use. This disclosure is a structural design of a fixed object, so that the users can browse or operate the object, greatly improving the convenience of use Further, this disclosure is in shape of a plate, which greatly reduces the thickness after storage. Due to the magnetic components, the object fixing structure of this disclosure is not easy to be unfolded by accidental touch, so that it is quite convenient to use, store and carry, which increases the convenience of use and practicability

While the invention has been described by means of specific embodiments, numerous modifications and variations could be made thereto by those skilled in the art without departing from the scope and spirit of the invention set forth in the claims.

## Claims

1. An object fixing structure, comprising:
a first plate-shaped fixing part; and
a second plate-shaped fixing part, having a first side, a second side, and a first curved part disposed between the first plate-shaped fixing part and the second plate-shaped fixing part, so that the first plate-shaped fixing part and the second plate-shaped fixing part can be folded relative to each other; **characterized in that** the first side is substantially in contact with the surface of an object and the second side is substantially parallel to the surface of the object during a storage state, and the second side and the first plate-shaped fixing part are attached and fixed with each other in a non-permanent fixation manner and the second side is substantially parallel to the surface of the object during a folded state.

2. The object fixing structure according to claim 1, wherein the first side and the second side are partially protruded from an edge of the object during the folded state.

3. The object fixing structure according to claim 1, further comprising a first plate-shaped fixing part substructure, and a part of the first plate-shaped fixing part substructure being coupled to the first plate-shaped fixing part.

4. The object fixing structure according to claim 3, wherein the first side is coupled to the first plate-shaped fixing part substructure during the storage state.

5. The object fixing structure according to claim 1, wherein the first plate-shaped fixing part has a surface coupled to a surface of an object.

6. The object fixing structure according to claim 1, further comprising a second plate-shaped fixing part substructure, and a second curved part being disposed between the second plate-shaped fixing part substructure and the second plate-shaped fixing part, and the second plate-shaped fixing part substructure and the second plate-shaped fixing part being bent by the second curved part.

7. The object fixing structure according to claim 1, further comprising a second plate-shaped fixing part substructure, and the second plate-shaped fixing part substructure and the second plate-shaped fixing part being coupled to each other in a non-permanent fixation manner.

8. The object fixing structure according to claim 1, wherein the first plate-shaped fixing part and the second plate-shaped fixing part have a magnetic part.

9. The object fixing structure according to claim 3, wherein the first plate-shaped fixing part substructure has a magnetic part.

10. The object fixing structure according to claim 6 or claim 7, wherein the second plate-shaped fixing part substructure has a magnetic part.

11. The object fixing structure according to claim 1, wherein the object is a screen, and the first side is attached to a non-display surface of the screen during the storage state, and the second side and a display surface of the screen are facing the same direction during the folded state.

12. The object fixing structure according to claim 1, wherein the first plate-shaped fixing part is coupled to the surface of the object in a non-permanent fixation manner or a permanent fixation manner.

13. The object fixing structure according to claim 1, wherein the second plate-shaped fixing part substructure and the second plate-shaped fixing part are coupled to each other by a magnetic part to define a stacked state, and the total magnetic force of the second plate-shaped fixing part substructure and the second plate-shaped fixing part is greater than the individual magnetic forces of the second plate-shaped fixing part substructure and the second plate-shaped fixing part during the stacked state.

14. An object fixing structure, comprising:
a first plate-shaped fixing part; and
a second plate-shaped fixing part, having a first side, a second side, and a first curved part disposed between the first plate-shaped fixing part and the second plate-shaped fixing part, so that the first plate-shaped fixing part and the second plate-shaped fixing part can be folded relative to each other; **characterized in that** the first plate-shaped fixing part comprises a first plate-shaped fixing part substructure, and a part of the first plate-shaped fixing part substructure and the first plate-shaped fixing part are coupled to each other, and a side of the first plate-shaped fixing part substructure is coupled to a surface of an object, and the first side and the surface of the object are substantially in contact with each other and the second side and the surface of the object are substantially parallel to each other during a storage state, and the second side and the first plate-shaped fixing part are attached to each other and fixed in a non-permanent fixation manner and the second side and the surface of the object are substantially parallel to each other during a folded state.

15. The object fixing structure according to claim 14, wherein the first side and the second side are partially protruded from an edge of the object during the folded state.

16. The object fixing structure according to claim 14, wherein the first side and the first plate-shaped fixing part substructure are coupled to each other during the storage state.

17. The object fixing structure according to claim 14, further comprising a second plate-shaped fixing part substructure, and a second curved part being disposed between the second plate-shaped fixing part substructure and the second plate-shaped fixing part, and the second plate-shaped fixing part substructure and the second plate-shaped fixing part being bent by the second curved part.

18. The object fixing structure according to claim 14, further comprising a second plate-shaped fixing part substructure, and the second plate-shaped fixing part substructure and the second plate-shaped fixing part being coupled to each other in a non-permanent fixation manner.

19. The object fixing structure according to claim 14, wherein the first plate-shaped fixing part and the second plate-shaped fixing part have a magnetic part.

20. The object fixing structure according to claim 14, wherein the first plate-shaped fixing part substructure has a magnetic part.

21. The object fixing structure according to claim 17 or claim 18, wherein the second plate-shaped fixing part substructure has a magnetic part.

22. The object fixing structure according to claim 14, wherein the object is a screen, and the first side is attached to a non-display surface of the screen during the storage state, and the second side and a display surface of the screen are facing the same direction during the folded state.

23. The object fixing structure according to claim 14, wherein the first plate-shaped fixing part substructure is coupled to the surface of the object in a non-permanent fixation manner or a permanent fixation manner.

24. The object fixing structure according to claim 14, wherein the second plate-shaped fixing part substructure and the second plate-shaped fixing part are coupled to each other by a magnetic part to define a stacked state, and the total magnetic force of the second plate-shaped fixing part substructure and the second plate-shaped fixing part is greater than the individual magnetic forces of the second plate-shaped fixing part substructure and the second plate-shaped fixing part during the stacked state.
